# EUROPEAN PATENT APPLICATION

(11) **EP 1 508 265 A1**
(43) Date of publication of application: **23.02.2005**
(21) Application number: 04254927.9
(22) Date of filing: 17.08.2004
(51) Int. Cl.: A01D 19/02, A01B 33/08

(54) **DE-MOUNTABLE ROTATABLE WORKING DEVICE**

(30) Priority: 19.08.2003 GB 0319431
(71) Applicant: Campmuir Potato Systems Limited, Forfar, DD8 3BT (GB)
(72) Inventor: Rae, Gary James, Forfar DD8 3BT (GB)
(74) Representative: Orr, William McLean

(57) **Abstract**

A rotatable working device (20) for mounting on the frame (6) of a machine, the device (20) comprising a drive shaft (9) and a number of working elements (10) mounted on the drive shaft, and the machine having bearing supports (7) provided on the frame (6) in which the drive shaft (9) can be rotatably mounted, and in which:
a two part hub assembly (1,2) is provided at at least one end of the drive shaft (9), and which comprises:
   a first hub portion (1) having a projecting stub shaft (1.1) intended to be received by a respective bearing support (7) and to be coupled with a drive coupling provided on the machine; and
   a second hub portion (2) which is connected to said one end of the drive shaft (9) and which is releasably coupled to the first hub portion (1) whereby, in an operating mode of the device, the drive coupling (8) can apply drive input to the shaft (9) via the first and second hub portions (1, 2) when they are coupled together and, upon release of the second hub portion (2) from the first hub portion (1) in a release mode of the device, the drive shaft (9) and working elements (10) mounted thereon can be de-mounted from the machine as a unit.

## Description

This invention relates to a de-mountable rotatable working device, and has been developed primarily, though not exclusively, in connection with a rotatable working device for use in an agricultural machine.

In agricultural machines, such as stone and clod separators, and root crop harvesters e.g. potato harvesters, it is usual to provide shaft-mounted working elements, such as so-called star wheels, star rollers, intake paddles and the like, which have a drive shaft which is mounted on the frame of the machine so as to extend generally parallel to the surface of the ground which is being worked by the machine, and generally perpendicular to the direction of working travel.

Star wheels are usually made of moulded plastics, having fingers which extend outwardly of the drive shaft and which engage soil, clods, stones or crop during a working operation of the machine. It is usual to mount stacks of star wheels on a single shaft, and which are slidably mounted from one end of the shaft, but over the passage of time these fingers become damaged, or worn to an unacceptable state, so that replacement of the related star wheels becomes necessary.

This requires the drive shaft to be de-mounted at each of its ends where it is rotatably mounted on a frame of the machine, so that the entire rotatable working device or module (e.g. a set of star wheels on a single drive shaft) can be removed from the machine so that worn or damaged star wheels can be replaced, and the device can be re-mounted on the frame of the machine.

Each shaft end therefore has to be mounted in a bearing support or assembly, and usually at least one shaft end (and possibly both shaft ends) has a rotary input coupling to which rotary power is supplied in order that the shaft and the working elements mounted thereon can be driven in order to carry out a working operation. A typical input coupling may comprise a pulley, in the case of a belt/pulley drive train provided to operate the working device, or a sprocket in the case of a chain drive.

With existing designs of shaft-mounted working devices in agricultural machines, it is a time-consuming task to first uncouple the drive train to the or each shaft end, and then to remove the shaft end from the bearing support by which it is rotatably mounted on the frame of the machine.

The present invention therefore seeks to provide an improved rotatable working device for mounting in a machine (especially for use in an agricultural machine) having a drive shaft and a number of working elements mounted on the drive shaft, in which the drive shaft and the working elements can be de-mounted and re-mounted as a unit relative to the machine, and without need to uncouple any drive coupling arranged on the machine to provide rotary drive to the shaft during operation.

According to the invention there is provided a rotatable working device for mounting on the frame of a machine, the device comprising a drive shaft and a number of working elements mounted on the drive shaft, and the machine having bearing supports provided on the frame in which the drive shaft can be rotatably mounted, and in which:
a two part hub assembly is provided at at least one end of the drive shaft, and which comprises:
   a first hub portion having a projecting stub shaft intended to be received by a respective bearing support and to be coupled with a drive coupling provided on the machine; and
   a second hub portion which is connected to said one end of the drive shaft and which is releasably coupled to the first hub portion whereby, in an operating mode of the device, the drive coupling can apply drive input to the shaft via the first and second hub portions when they are coupled together and, upon release of the second hub portion from the first hub portion in a release mode of the device, the drive shaft and working elements mounted thereon can be de-mounted from the machine as a unit.

The invention therefore enables a rotary working device to be mounted in, or de-mounted from the frame of a machine, and without any requirement to couple or uncouple respectively the drive coupling provided on the machine to drive the device.

In a preferred embodiment, the rotary working device comprises a working module for mounting on an agricultural stone and clod separator machine, or a root crop harvester, such as a potato harvester.

The drive shaft may mount a stack of working elements, such as star wheels or star rollers.

Preferably, a two part hub assembly may be provided at each end of the drive shaft, and one or both hub assemblies may have the respective first hub portion coupled drivingly with the, or the respective drive coupling, both in the operating mode, or in the release mode.

Conveniently, there is a slidable interfit between the first and second hub portion, and this may be provided by a slot in one hub portion and a matching projection on the other hub portion.

The hub portions may comprise circular discs, and the slot and matching projection therefore preferably are provided on facing sides of the discs.

To maintain the hub portions in engagement with each other, any suitable releasable retension elements may be provided e.g. pegs removable from aligned holes in the discs; bolts or threaded fasteners.

A preferred embodiment of rotary working device according to the invention will now be described in detail, by way of example only, with reference to the accompanying drawings, in which the device takes the form of a removable shaft-driven working module for use in an agricultural machine, and in which:

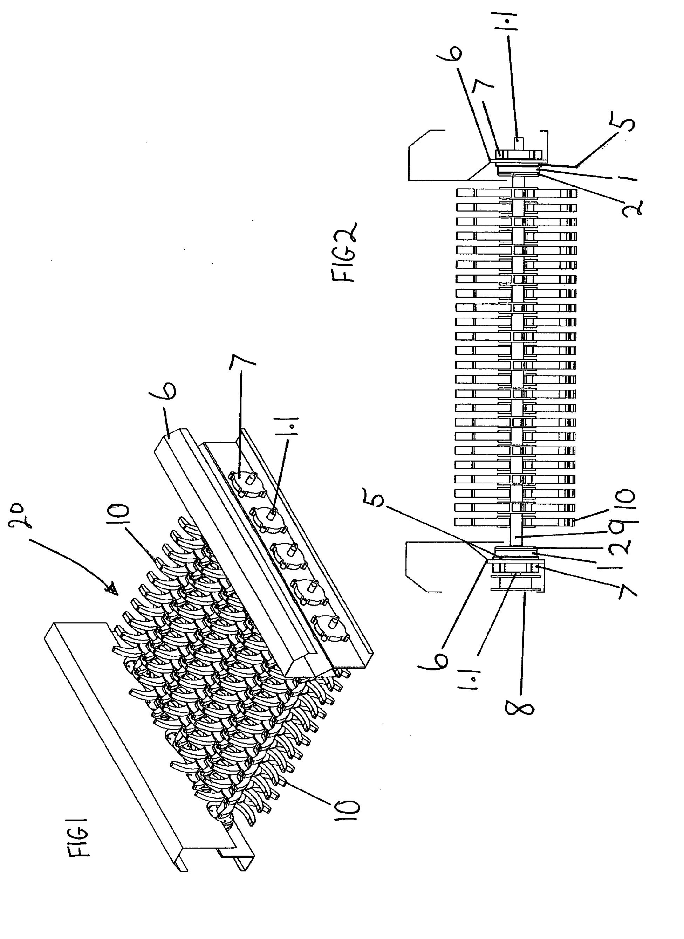

Figure 1 is a perspective illustration showing a series of working modules mounted on the frame of an agricultural machine, in which each module has a drive shaft on which a stack of star wheels or rollers are mounted;
Figure 2 is a side view of one of the modules;
Figure 3 is a similar view, but with the working elements, namely star wheels removed;

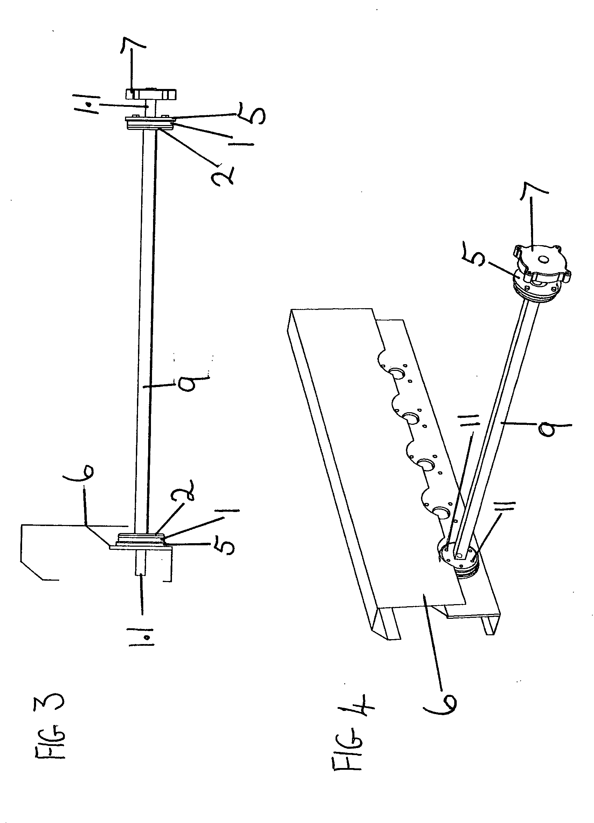

Figure 4 is a detailed perspective view of a typical drive shaft or drive bar, showing how the shaft end is mounted in the frame of the machine;
Figure 5 is a side view of the shaft, also with no working elements mounted thereon;
Figure 6 is a perspective illustration of the drive shaft in the initial stage of removal from being mounted in the frame of the machine; and
Figure 7 is a detailed view showing first and second hub portions of a hub assembly for mounting on one or both ends of the drive shaft.

Referring now to the drawings, the preferred embodiment which will be described is a removable working module for mounting in a stone and clod separator, or a root crop harvester such as a potato harvester. A series of working modules is rotatably mounted in the frame of the machine, with the drive shafts extending generally parallel to the surface of the ground over which the machine travels, and generally perpendicular to the direction of working travel. Each drive shaft therefore has a stack of working elements mounted thereon which, in the illustrated embodiment, comprise star wheels or rollers 10.

A rotary working device according to the invention is therefore designated generally by reference 20, and is shown mounted on the frame 6 of an agricultural machine. Each working module has a drive shaft 9, and a number of working elements, in the form of star wheels 10, mounted on the drive shaft 9 for rotation therewith. The drive shaft 9 and the working elements 10 can be de-mounted and re-mounted as a unit relative to the agricultural machine, and without need to uncouple any drive coupling arranged on the machine to provide rotary drive input to the shaft during operation.

The machine frame 6 is provided with bearing supports 7 mounted on downwardly extending flanges 5 of the frame 6, and in which the drive shaft 9 can be rotatably mounted.

A two-part hub assembly is provided at at least one end of the drive shaft 9, and in the illustrated embodiment similar hub assemblies are provided at each end of the drive shaft. Each hub assembly comprises a first hub portion 1 having a projecting stub shaft 1.1 intended to be received by the respective bearing support 7, and to be coupled with a drive coupling provided on the machine. In the illustrated embodiment, the drive train to operate the drive shaft comprises a belt and pulley arrangement, and Figure 2 shows a pulley 8 provided on one end of the drive shaft 9. If drive input is required to both ends of the shaft 9, a similar arrangement of drive coupling will be provided at each end, and coupled permanently with the first hub portion 1.

Each hub assembly also includes a second hub portion 2 which is connected to one end of drive shaft 9 and which is releasably coupled to the first hub portion 1 whereby, in an operating mode of the device, the drive coupling can apply drive input to the shaft via the first and second hub of portions 1 and 2 when they are coupled together. However, upon release of the second hub portion 2 from the first hub portion 1, in a release mode of the device, the drive shaft 9 and working elements 10 mounted thereon can be de-mounted from the machine as a unit.

The releasable coupling between each first and second hub portion 1, 2 preferably takes the form of a slidable interfit between the hub portions, and provided by a slot in one hub portion and a matching projection on the other hub portion. As illustrated, each hub portion 1, 2 comprises a circular disk, and the slot and matching projection are provided on facing sides of the disk. The illustrated embodiment shows a slot 1.2 in one side face of first hub portion 1, and a tongue or projection 2.1 of rectangular cross section provided on the facing side of second hub portion 2.

To maintain the hub portions 1, 2 in engagement with each other, any suitable releasable retention elements may be provided , such as pegs or pins 11 removable from aligned holes 12 in the disks. Alternatively, bolts or threaded fasteners may be utilised.

Holes 3 are also illustrated, extending through second hub portion 2, and which are intended to be aligned with holes 4 in first hub portion 1, also to receive suitable retaining elements.

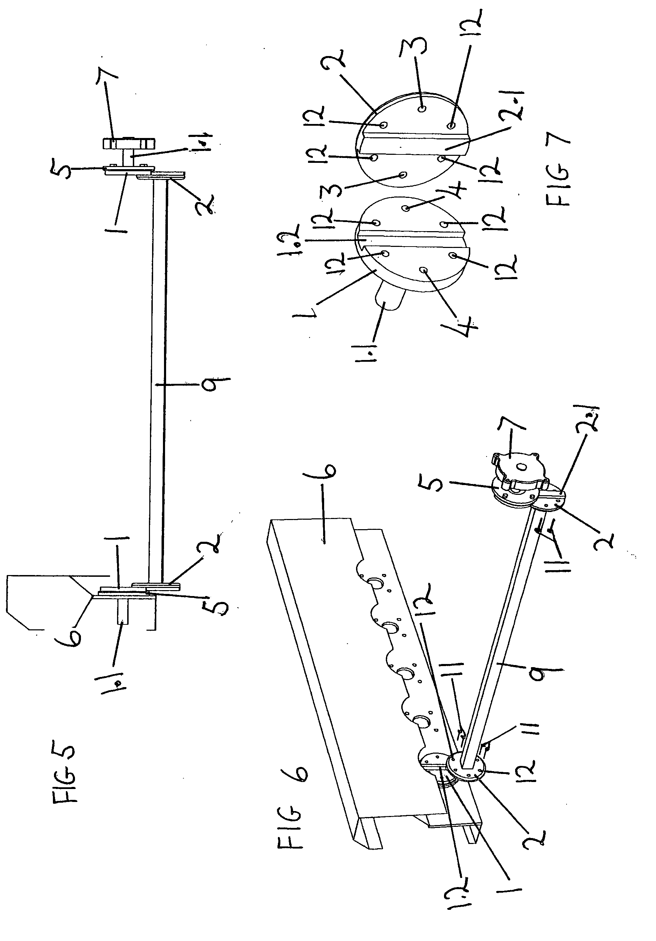

Each hub assembly may be formed from a circular plate, preferably made of steel, having on one face, situated centrally, appropriate size of drive shaft 9, and a centrally located groove 1.2 on one face of hub portion 1 of appropriate dimensions provides a close fit with centrally located projection 2.1 on the facing side of second hub portion 2, also made of circular steel plate. Dowels may be used to help locate the two hub portions together, taken through holes 3 and 4. Holes 12, shown in Figure 7, may also allow the hub portions 1 and 2 to be bolted together. The connecting faces may also incorporate interlocking serrations, or similar to improve grip between the two surfaces (not shown).

Hub portion 1, as shown in Figure 2, is mounted in position on the frame of the machine, and on the left side of the hub portion 1, there is shown a flange connected to frame 6 of the machine body, on which bearing support 7 is mounted through which the respective drive stub shafts 1.1 are taken.

Drive pulley 8 is shown in Figure 2, fitted to one end of the respective stub shaft 1.1 by means, such as a bolt. Alternative drive trains may be provided e.g. chain and sprocket drive. Also, drive inputs may be provided at each end of the drive shaft 9.

Located against hub portion 1, on the right side as viewed in the drawing, and connected by means such as bolts and dowels, there is shown second hub portion 2, to which shaft 9 is coupled by suitable means, such as bolts. Possibly, a location recess (not shown) could allow shaft 9 to extend the required distance across the machine to which it is fitted. Star rollers or wheels 10 are shown fitted to shaft 9, but evidently other types of working elements may be mounted on the shaft.

At the other side of the machine, a similar arrangement to that previously mentioned is provided, although in the illustrated embodiment this end of the drive shaft is not required to receive rotary drive input, and therefore no drive pulley is fitted. All of the hub and shaft components will be constructed from any suitable material, preferably steel, and the bearings and pulley may be of known types.

In order to remove the shaft 9 and working elements 10 as a unit, the hub portions 1 and 2 of each hub assembly are separated, and Figure 6 shows initial stage of the separating movement whereby the drive shaft and its working elements are removed as a unit from the machine, which will usually take place when unacceptable wear or damage has been done to the working elements. This is done by sliding shaft 9 and second hub portions 2 away from first hub portions 1 along the grooves 1.2, to remove the components from the machine. The second hub portions 2 can be removed from shaft 9, if required, so as to gain access to the working devices located on the shaft. Re-fitting of the shaft and hub portion 2 is by a reversal of the removal procedure.

In place of shaft mounted working elements, the invention also contemplates a removable cylinder, which may feature a series of rotor, instead of the illustrated star rollers, but otherwise the hubs, location devices and removal procedures would otherwise be similar (this alternative version is not shown in the drawings).

## Claims

1. A rotatable working device (20) for mounting on the frame (6) of a machine, the device (20) comprising a drive shaft (9) and a number of working elements (10) mounted on the drive shaft, and the machine having bearing supports (7) provided on the frame (6) in which the drive shaft (9) can be rotatably mounted, and in which:
a two part hub assembly (1,2) is provided at at least one end of the drive shaft (9), and which comprises:
a first hub portion (1) having a projecting stub shaft (1.1) intended to be received by a respective bearing support (7) and to be coupled with a drive coupling provided on the machine; and
a second hub portion (2) which is connected to said one end of the drive shaft (9) and which is releasably coupled to the first hub portion (1) whereby, in an operating mode of the device, the drive coupling (8) can apply drive input to the shaft (9) via the first and second hub portions (1, 2) when they are coupled together and, upon release of the second hub portion (2) from the first hub portion (1) in a release mode of the device, the drive shaft (9) and working elements (10) mounted thereon can be de-mounted from the machine as a unit.

2. A device according to claim 1, in which the drive shaft (9) mounts a stack of working elements (10) thereon, such as star wheels or star rollers (10).

3. A device according to claim 1 or 2, in which a two part hub assembly (1,2) is provided at each end of the drive shaft (9).

4. A device according to claim 3, in which one or both hub assemblies (1, 2) has the respective first hub portion coupled drivingly with the or the respective drive coupling (8) both in the operating mode, and in the release mode.

5. A device according to any one of the preceding claims, in which there is a slidable inter-fit between the first and second hub portions (1, 2).

6. A device according to claim 5, in which the slidable inter-fit is provided by a slot (1.2) in one hub portion (1) and a matching protection (2.1) on the other hub portion (2).

7. A device according to any one of the preceding claims, in which the hub portions (1, 2) comprise circular disks.

8. A device according to any one of the preceding claims, in which the hub portions (1, 2) are maintained in engagement with each other by releasable retention elements, such as pegs or dowels (11) and/or bolts removable from aligned holes (3, 12) in the hub portions.

9. A device according to any one of the preceding claims, in which the drive shaft (9) and working elements (10) mounted thereon are replaced by a cylindrical device having a series or rotors forming said working elements, and in which the ends of said cylinder are provided with said hub assemblies.
